# EUROPEAN PATENT SPECIFICATION

(11) **EP 0 934 780 B1**
(45) Date of publication and mention of the grant of the patent: **06.04.2005**
(21) Application number: 99101350.9
(22) Date of filing: 25.01.1999
(51) Int. Cl.: B09C 1/02

(54) **Process for removing contaminants from moist soil**
Verfahren zur Entfernung von Verunreinigungen aus feuchten Böden
Procédé pour éliminer des contaminants de sols humides

(30) Priority: 04.02.1998 IT MI980202
(43) Date of publication of application: 11.08.1999
(73) Proprietor: Ambiente S.p.A, S. Donato Mil.se (Milano) (IT); ENITECNOLOGIE S.p.A., 20097 S. Donato Milanese (Milano) (IT)
(72) Inventor: Pappa, Rosario, Monterotondo (Roma) (IT); Massetti, Felicia, Castelnuovo di Porto (Roma) (IT); D'Angeli, Edoardo, Roma (IT); Buzzelli, Maurizio, S. Donato Milanese (Milano) (IT); Carrera, Paolo, Milano (IT)
(74) Representative: Bordonaro, Salvatore

(56) References cited:
- EP-A- 0 446 975
- US-A- 4 938 287
- US-A- 5 585 002

## Description

The present invention relates to a reclaiming process of moist soil polluted by organic compounds.

The problem of earth polluted by organic contaminants such as for example hydrocarbons, polynuclear aromatics, organochlorinated products is becoming more and more dramatic in industrialized countries, not only in terms of interventions for soil and underground water pollution, but also for the necessity of recovering areas of possible industrial and civil use.

Another problem, which is typical of the petroleum industry, is the treatment of drill cuttings before discharging into the sea.

There are many forms of pollution and various characteristics of the ground subject to pollution. These circumstances require the availability of numerous possible solutions.

The "soil washing" technique which involves washing with water and optionally additives (generally surfactants), is widely used. This technique however has the disadvantage of using large quantities of water and the recovery of the surface-active agent is rather difficult and costly.

Other processes in the known art are those using organic solvents, such as for example, methylene chloride or liquefied C₂-C₄ hydrocarbons. Earth polluted with high quantities of water however is difficult to treat by means of extraction with a solvent.

With respect to soil with high quantities of water up to the field capacity limit, there is a patent in the known art (U.S. 5.585.002) which relates to an extracting mixture consisting of a solvent-cosolvent (under preferred conditions ethyl acetate-acetone or acetic acid) in such proportions as to form a single phase with the water contained in the earth. A gross fraction of soil is obtained purified of pollutants together with a liquid phase which also contains, as well as the pollutants, the fine fraction (less than 106 microns) of the soil. In this process it is therefore necessary to have a recovery step of the fine fraction of earth.

We have now surprisingly found that this type of earth, which, when it is either slimy or argillaceous with a water content of more than 10%, has a fine fraction of soil of more than 15-20%, it can be treated with the solvent ethyl acetate alone. In this way, as a soil is obtained purified of pollutants and consisting of both a gross and fine fraction, the process is considerably simplified.

In accordance with this, the present invention relates to a process for separating organic pollutants from a composition, consisting of earth containing water in a quantity ranging from 10% up to the field saturation limit and said organic pollutants, comprising the following steps:
(a) mixing said composition with ethyl acetate solvent in a ratio ranging from 0.5 to twice the weight with respect to the soil;
(b) removal of the solvent from the soil by decanting;
(c) drying the soil as per step (b), said soil, comprising both the gross and fine fraction conglomerated with water;
(d) recovering the solvent as per step (b) by evaporation.

The solvent (ethyl acetate) used in step (a) is not toxic, is easily biodegradable and is therefore extremely acceptable for the environment.

The optimum ratio solvent weight/weight of soil is between 0.5 and 2 and under the preferred conditions is between 0.5 and 1.

The separation according to step (b) takes places instantaneously at the end of the mixing owing to the fact that the fine fraction in the soil is maintained in an agglomerated form by the water and if at all, only a minimum part passes into the extraction solvent. For the drying of the soil (step c) a rotating-drum drier, with a tape, or other commercial equipment can be used at a temperature of about 80°C so as to remove the residues of extraction solvent. The recovery of the exhausted solvent (step d) can be carried out with a thin film evaporator with scraped walls operating at atmospheric pressure or in slight depressure, obtaining the fraction extracted from the soil and minimum quantities of water at the bottom of the boiler and a fraction consisting of the extraction solvent as per step (a) at the head.

With the process described according to the present invention it is therefore possible to easily decontaminate earth containing water at field capacity limits with a single apolar solvent obtaining results comparable to the system with two components miscible with water described above.

In addition the operating simplicity is greater in that:
- the separation of the inert fraction (in particular the fine fraction) from the solvent is obtained by simple decanting;
- the exhausted solvent is easier to recover as it is poor in water;
- the agronomical characteristics of the soil remain unaltered as the water bound to it is not removed from the solvent, keeping the texture unaltered.

### EXAMPLE 1

A sample of soil removed from a site polluted by polycyclic aromatic hydrocarbons (IPA) has the following characteristics:
pH in aqueous sol. 6.96; in KCl 1N 7.23
Humidity content 25.3%
Conductivity 1.07 mS/cm
saline concentration 6.58 mEq/100g
Total IPA 2500 ppm (determined by gas-chromatography)
Agronomical characterization: sand 59%, slime 21%, clay 19%.

A kilo of this earth is placed in a rotating cylinder together with 500 g of ethyl acetate and put under stirring at room temperature for 30 minutes. After sedimenting the earth for 5 minutes, the liquid phase is filtered on a teflon filter with 0.46 micron holes, in order to determine by weighing the fine fraction entrained by the solvent, which proves to be 0.9% of the weight of the earth.

The ethyl acetate is recovered from the liquid fraction by distillation in a rotating evaporator at 90°C. 470 g of solvent are recovered which with the addition of a further 30 g of fresh ethyl acetate are used for a second washing cycle of the soil.

The concentration of IPA in the soil after this second treatment after drying in air for 24 hours, amounts to 80 ppm. This value is lower than the maximum limit granted by law for re-using the site for industrial purposes (Bollettino Ufficiale (Official Bulletin) for Tuscany Nr. 36 of June 16 1993).

### EXAMPLE 2

A 1 kg sample of the soil of example 1 is dried in air for 48 hours until the water content is reduced from 25.3 to 3.2% and then treated as described in example 1. An entrainment into the solvent of 150 g of fine fraction of the sample is observed. This dispersion remained stable for several hours making it necessary to carry out centrifugation to separate the solid from the liquid.

The solvent recovered by distillation is used for a second washing of the soil. After the second centrifugation, the two fine fractions of the soil are joined to the gross fraction and dried in air for 24 hours.

The concentration of IPA in the soil after the second treatment amounts to 357 ppm, a value which is 200 ppm higher than the maximum limit indicated by law for re-using the site.

### EXAMPLE 3

A sample of soil is dried as in example 2 and water is then added to bring the content of humidity to the original 25%.

After treatment as in example 1, it is noted that the solvent, obtained by simple decanting, contains less than 0.9% of fine fraction.

Analysis of the IPA indicates a residual concentration of 74 ppm, a value which confirms the results of example 1 both in terms of reclaiming of the earth and simplicity of the recovery of the solvent.

### EXAMPLE 4

A sample of soil, removed from a polluted site contains 23.2% of humidity, a fine fraction of less than 100 microns of about 35% by weight, 1100 ppm of polyhalogenated aromatic hydrocarbons.

A kilogram of this soil is treated with 500 g of ethyl acetate as described in example 1, and the complete absence of fine fraction of earth in the solvent recovered, is observed. After a second treatment with the same quantity of ethyl acetate, the concentration of polyhalogenated aromatic hydrocarbons in the soil amounts to a total of 28 ppm, with a concentration of each single pollutant of less than the 10 ppm established as maximum limit by law for re-using areas for industrial purposes.

### EXAMPLE 5

A soil contains 15% humidity, a fine fraction (less than 100 microns) of about 40% by weight and 1200 ppm of polyhalogenated aliphatic and aromatic hyrocarbons. A 1 kg sample of this soil is treated as described in example 1. After the second washing, the concentration of hydrocarbons in the soil amounts to a total of 10 ppm, with a concentration of each single pollutant less than the maximum limit established by the law in force for re-using polluted sites for industrial purposes.

## Claims

1. A process for separating organic pollutants from a composition, consisting of earth containing water in a quantity ranging from 10% up to the field saturation limit and said organic pollutants, consisting of the following steps:
(a) mixing said composition with ethyl acetate solvent in a ratio ranging from 0.5 to twice the weight with respect to the soil;
(b) removal of the solvent from the soil by decanting;
(c) drying the soil as per step (b), said soil, comprising both the gross and fine fraction conglomerated with water;
(d) recovering the solvent as per step (b) by evaporation.

2. The process according to claim 1, **characterized in that** the organic pollutants are aliphatic hydrocarbons, polynuclear aromatic hydrocarbons, organochlorinated products.

3. The process according to claim 1, characterzied in that in step (a) the weight ratio of solvent/earth is 0.5-1.

## Patentansprüche

1. Verfahren zur Trennung von organischen Schadstoffen aus einer Verbindung, bestehend aus Erde mit Wassergehalt von 10% bis zur Feldsättigungsgrenze und besagten organischen Schadstoffen. Das Verfahren beinhaltet folgende Stadien:
(a) Mischen besagter Verbindung mit Äthylacetat-Lösungsmittel im Gewichtsverhältnis von 0,5 -2 zum Boden;
(b) Entfernen des Lösungsmittels vom Boden durch Dekantieren;
(c) Trockenlegung des Bodens im Stadium gemäß (b), wobei besagter Boden sowohl die groben als auch die feinen und mit Wasser geklumpten Teile umfasst;
(d) Wiedergewinnung des Lösungsmittels im Stadium gemäß (b) durch Evaporation.

2. Verfahren laut Anspruch 1, wobei die organischen Schadstoffe aliphatische Kohlenwasserstoffe, aromatische polinukleare Kohlenwasserstoffe und Organochlorverbindungen sind.

3. Verfahren laut Anspruch 1, wobei im Stadium (a) das Gewichtsverhältnis von Lösungsmittel zum Boden 0,5 - 1 beträgt.

## Revendications

1. Processus permettant de séparer les polluants organiques d'une composition, se constituant d'un terrain contenant de l'eau à partir d'un taux de 10% jusqu'à la limite de la saturation de champ et de ces polluants organiques, comprenant les stades suivants :
(a) mélange de cette composition avec du solvant éthyle acétate dans un rapport de poids de 0,5 à 2 fois par rapport au sol ;
(b) éloignement du solvant du sol par décantation;
(c) dessèchement du sol mentionné au stade (b) comprenant ledit sol, tant dans la fraction grossière que dans la fraction fine conglomérée avec l'eau ;
(d) récupération par évaporation du solvant mentionné au stade (b).

2. Processus selon la revendication 1 **caractérisée par le fait que** les polluants organiques sont des hydrocarbures aliphatiques, des hydrocarbures aromatiques polynucléaires, organo-chlorurés.

3. Processus selon la revendication 1 **caractérisé par le fait que**, dans le stade (a), le rapport en poids du solvant/terrain est de 0,5-1.
